# FASCICULE DE BREVET EUROPEEN

(11) **EP 3 294 595 B1**
(45) Date de publication et mention de la délivrance du brevet: **10.04.2019**
(21) Numéro de dépôt: 16716511.7
(22) Date de dépôt: 31.03.2016
(51) Int. Cl.: B60S 1/58

(54) **DISPOSITIF D'ESSUYAGE DE VITRE DE VÉHICULE AUTOMOBILE**
SCHEIBENWISCHERANLAGE FÜR KRAFTFAHRZEUGEN
WINDSCREEN WIPER SYSTEM FOR VEHICLES

(30) Priorité: 13.05.2015 FR 1554310
(43) Date de publication de la demande: 21.03.2018
(73) Titulaire: Valeo Systèmes d'Essuyage, 78322 Le Mesnil Saint Denis (FR)
(72) Inventeur: GAUCHER, Vincent, 78322 Le Mesnil Saint-Denis cedex (FR); HOUSSAT, Stéphane, 78322 Le Mesnil Saint-Denis cedex (FR)
(74) Mandataire: Valeo Systèmes d'Essuyage
(86) Numéro de dépôt international: PCT/EP2016/057132
(87) Numéro de publication internationale: WO 2016/180572

(56) Documents cités:
- EP-A2- 1 164 064
- DE-A1- 10 305 904
- DE-A1-102010 054 150
- FR-A1- 2 890 024
- FR-A1- 2 994 915
- US-A1- 2014 215 745

## Description

La présente invention a trait au domaine de l'essuyage, et plus particulièrement à l'essuyage d'une vitre de véhicule automobile par un balai d'essuyage dont le mouvement de balayage est commandé par un arbre d'entraînement rotatif.

On connaît des balais d'essuyage montés à l'extrémité d'un porte-balai rendu solidaire d'un arbre entraîné en rotation par un ensemble moteur, de sorte que la zone de la vitre essuyée par le balai présente une forme régulière circulaire, de rayon correspondant à la longueur du balai d'essuyage. Cette forme régulière est particulièrement intéressante lorsque plusieurs balais sont prévus en fonctionnement parallèle sur une même vitre, tel que cela est notamment le cas dans les parebrises avant de véhicule. Toutefois, dans le cas d'un essuyage de vitre arrière, il est courant de ne prévoir qu'un seul balai, et il peut être intéressant d'agrandir la zone d'essuyage.

Le document DE 10 2010 054 150 A1 montre un dispositif d'essuyage de vitre de véhicule automobile tel que décrit dans le préambule de la première revendication.

Dans ce contexte, l'invention propose un dispositif d'essuyage de vitre de véhicule automobile, comportant un balai d'essuyage entraîné par la rotation d'un arbre d'entraînement disposé en sortie d'un ensemble moteur adapté à créer un mouvement de rotation alternée dudit arbre d'entraînement. Selon une caractéristique de l'invention, le dispositif d'essuyage comporte également des moyens d'entraînement en translation dudit ensemble moteur et l'arbre d'entraînement porte une partie de ces moyens d'entraînement. De la sorte, c'est la rotation de l'arbre d'entraînement qui crée une translation de l'ensemble moteur.

Ainsi, la zone d'essuyage n'est plus définie par une trajectoire circulaire du balai d'essuyage, comme précédemment défini dans l'art antérieur, mais par une trajectoire elliptique, le centre de rotation du balai se déplaçant le long d'un axe longitudinal. On augmente ainsi la zone de balayage, tout en gardant une architecture avec un balai d'essuyage simple.

Selon une caractéristique avantageuse de l'invention, les moyens d'entraînement en translation sont formés par la combinaison de moyens de transformation d'un mouvement de rotation en un mouvement de translation, et de moyens de guidage en translation.

Dans un mode de réalisation préféré de l'invention, les moyens de transformation d'un mouvement de rotation en un mouvement de translation sont formés par un ensemble pignon-crémaillère, notamment à dentures droites. L'arbre d'entraînement porte le pignon, tandis que la crémaillère est fixe par rapport à la vitre à essuyer. Le pignon et la crémaillère sont continuellement en prise, de sorte qu'il n'y a pas d'à coup lors du déplacement en translation de l'ensemble moteur, et que le balayage réalisé par le dispositif d'essuyage est régulier.

Selon une caractéristique de l'invention dans son mode de réalisation préféré, la crémaillère est formée sur une platine disposée transversalement à l'arbre d'entraînement. La crémaillère peut être formée sur une tranche de cette platine pour coopérer avec le pignon porté par l'arbre d'entraînement.

Dans un mode de réalisation préféré de l'invention, les moyens de guidage en translation comportent un chariot solidaire de l'ensemble moteur qui est adapté à coulisser le long d'un rail, transversalement à l'axe de rotation de l'arbre d'entraînement. Avantageusement, la platine peut porter ce rail, en sus de la crémaillère. On comprend que cette disposition, dans laquelle la platine porte une partie des moyens de transformation de la rotation de l'arbre d'entrainement en translation de l'ensemble moteur et une partie des moyens de guidage en translation, facilite le montage du dispositif. Il convient que les moyens de transformation de la rotation de l'arbre d'entrainement en translation de l'ensemble moteur et les moyens de guidage en translation soient correctement disposés les uns par rapport aux autres pour qu'ils puissent coopérer lorsque le moteur est en marche, et le fait que la platine porte une partie de chacun de ces moyens limite les jeux de montage.

Dans différentes variantes de réalisation, on pourra prévoir de réaliser le mouvement de rotation alternée de l'arbre d'entraînement soit par un ensemble moteur alternatif, soit par la combinaison d'un ensemble moteur à rotation continue et d'un dispositif mécanique, notamment disposé entre l'arbre d'entraînement et l'ensemble moteur, qui crée cette alternance.

L'invention concerne également un élément de structure de véhicule automobile, comportant une vitre adaptée à être essuyée par le dispositif. L'élément de structure comporte un trou à travers lequel l'arbre d'entraînement est apte à passer pour être, d'un côté de l'élément de structure, en prise avec le balai d'essuyage de la vitre et pour être, de l'autre côté de l'élément de structure, en prise avec l'ensemble moteur. Selon une caractéristique de l'invention, le trou présente une forme oblongue d'axe parallèle à la direction de coulissement de l'ensemble moteur.

Ainsi, l'arbre d'entraînement peut suivre le coulissement de l'ensemble moteur et il peut continuer à réaliser sa fonction d'entraînement en rotation du balai d'essuyage quelle que soit la position longitudinale de l'ensemble moteur.

L'invention concerne en outre un véhicule automobile comportant un dispositif d'essuyage tel que décrit précédemment.

D'autres caractéristiques et avantages de l'invention apparaîtront à la lecture de la description détaillée d'un mode de réalisation qui va suivre, pour la compréhension de laquelle on se reportera aux figures annexées parmi lesquelles:
- la figure 1 est une vue en perspective d'un dispositif d'essuyage de vitre selon l'invention, dans laquelle on aperçoit notamment une platine, un rail et un chariot formant des moyens de guidage en translation, un ensemble moteur et des moyens pignon et crémaillère permettant la transformation d'un mouvement de rotation en un mouvement de translation ;
- la figure 2 est une vue de face du dispositif de la figure 1 selon une position dite primaire du dispositif, dans laquelle l'ensemble moteur est disposé à une première extrémité du rail solidaire de la platine ;
- la figure 3 est une vue de face du dispositif de la figure 1 selon une position dite secondaire du dispositif, dans laquelle l'ensemble moteur est disposé à une deuxième extrémité du rail solidaire de la platine ;
- la figure 4 est une vue de face représentant l'arbre d'entraînement, le porte balai et le balai d'essuyage du dispositif selon la figure 1 dans ladite position primaire ;
- la figure 5 est une vue similaire à la figure 4, l'arbre d'entraînement, le porte balai et le balai d'essuyage étant ici dans ladite position secondaire ; et
- la figure 6 est une représentation schématique de la zone de balayage couverte par un dispositif d'essuyage selon l'invention, comparée à la zone de balayage classiquement réalisée.

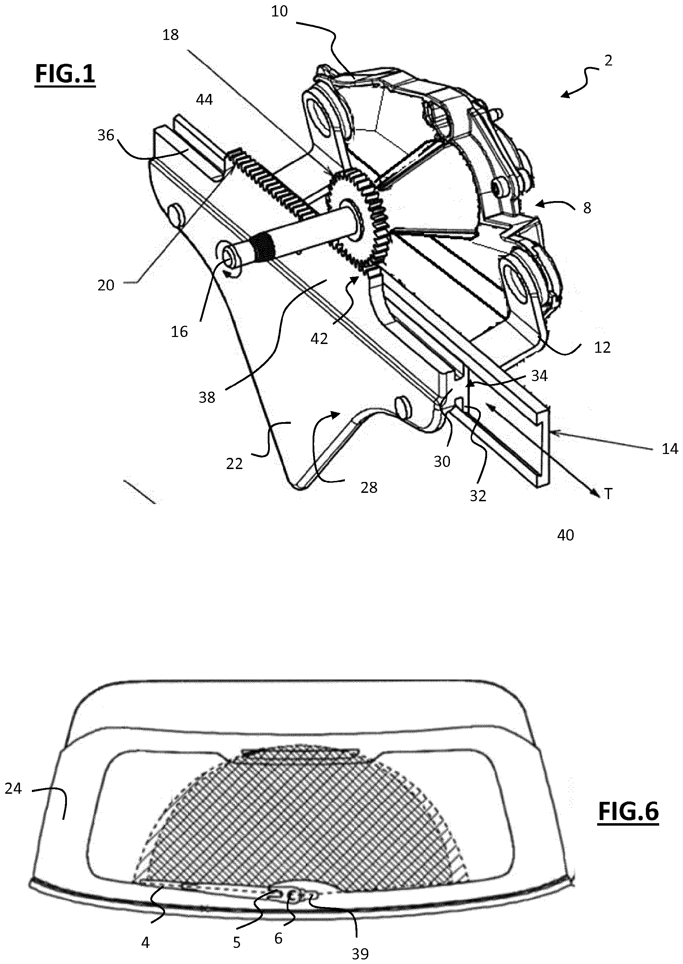

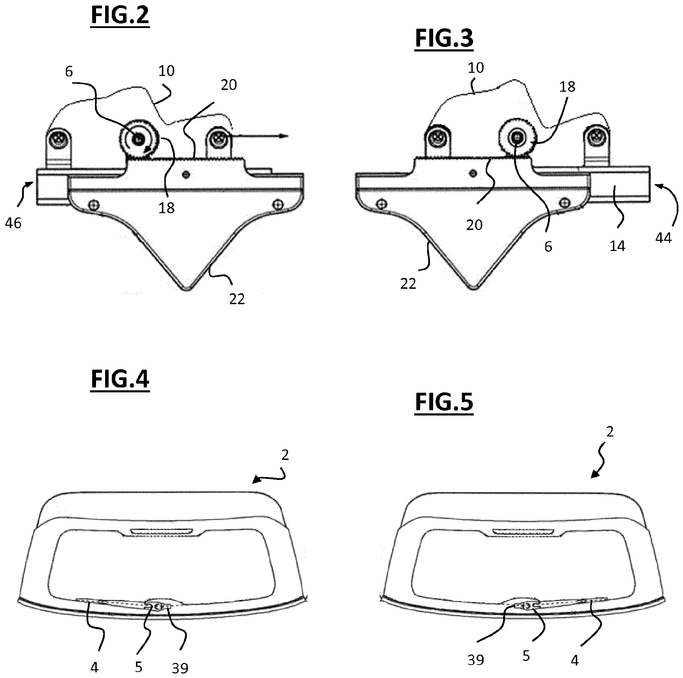

Un dispositif d'essuyage de vitre 2 comporte un balai d'essuyage 4 (visible sur les figures 4, 5 ou 6) monté sur un porte balai 5 qui est rendu solidaire d'un arbre d'entraînement 6, disposé dans le prolongement de l'arbre moteur, en sortie de l'ensemble moteur 8 associé, tel que cela est plus visible sur la figure 1.

L'arbre d'entraînement est entraîné en rotation par l'ensemble moteur. Avantageusement, le mouvement de rotation transmis à l'arbre d'entraînement, et donc au balai d'essuyage porté par cet arbre, est un mouvement de rotation alternée, c'est-à-dire qu'il passe alternativement d'une première position extrême (visible sur la figure 4) à une deuxième position extrême (visible sur la figure 5) en tournant dans un sens de rotation donné, puis en tournant dans le sens de rotation inverse. Ce mouvement de rotation alternée permet de réaliser ainsi le mouvement connu de va-et-vient des balais d'essuyage. Dans un mode de mise en oeuvre particulier de l'invention, on utilise un moteur à rotation continue, et on applique entre le moteur et la roue d'entraînement un dispositif mécanique qui permet de transformer le mouvement de rotation continue en un mouvement de rotation alternée.

Selon l'invention, on prévoit des moyens d'entraînement en translation de l'ensemble moteur, et donc de l'arbre d'entraînement solidaire de ce dernier.

L'ensemble moteur 8 comporte des moyens mécaniques, ici non représentés, logés dans un carter 10 qui est fixé, par l'intermédiaire d'équerres de fixation 12, sur un chariot 14. Ce chariot s'étend sensiblement dans un plan transversal à l'axe de rotation de l'arbre d'entraînement disposé en sortie de l'ensemble moteur.

L'arbre d'entraînement 6 s'étend selon un axe longitudinal, et il présente une extrémité proximale rendue solidaire du moteur de l'ensemble moteur, et une extrémité distale 16 rendue solidaire du balai d'essuyage.

L'arbre d'entraînement porte sur son pourtour un pignon fixe 18, solidaire en rotation de l'arbre. Tel qu'il est visible sur les figures 1 à 3, le pignon est de denture droite, et il est apte à être en prise avec une crémaillère 20, qui sera détaillée ci-après.

Dans le mode de réalisation représenté, la crémaillère est portée par une platine 22, qui est fixée sur un élément de structure 24 du véhicule.

La platine est sensiblement plane et elle peut présenter un galbe pour suivre la courbure éventuelle de l'élément de structure. Elle présente une face interne tournée vers l'ensemble moteur et une face externe 28 tournée vers l'élément de structure.

La platine comporte sur sa face interne une poutre 30 qui s'étend en saillie de la platine, en présentant sensiblement une forme « en T ». La poutre comporte deux ailettes 32, qui s'étendent sensiblement parallèlement à la face interne de la platine, pour former un rail de guidage 34 selon une direction transversale à l'arbre d'entraînement, le long de la platine.

La platine comporte un bord supérieur 36 dont la partie centrale 38 est dégagée verticalement des parties latérales. Cette partie centrale du bord supérieur est usinée de manière à former la crémaillère 20.

La crémaillère est formée par des crans usinés sur une tranche de la platine, qui s'étend selon un axe transversal à l'axe longitudinal de l'arbre d'entraînement. Les crans de crémaillère présentent un pas et des dimensions correspondant à ceux de la denture du pignon. La crémaillère est fixe par rapport à la vitre à essuyer du fait de la fixation de la platine, qui porte la crémaillère, sur l'élément de structure du véhicule, qui porte la vitre à essuyer.

La crémaillère 20 et le pignon 18 forment ici des moyens de transformation de la rotation de l'arbre d'entraînement en translation de l'ensemble moteur, et donc de l'arbre d'entraînement associé.

Ces moyens de transformation forment les moyens d'entraînement en translation, notamment lorsqu'ils sont associés avec des moyens de guidage en translation de l'ensemble moteur. Le rail 34, formé par les ailettes de la poutre, est adapté à coopérer avec la forme correspondante du chariot 14, de sorte que le rail et le chariot, sur lequel est fixé l'ensemble moteur, forment des moyens de guidage de la translation de l'ensemble moteur.

On comprend que selon l'invention, la platine 22 porte à la fois une partie des moyens de transformation de la rotation de l'arbre d'entraînement en translation de l'ensemble moteur, et une partie des moyens de guidage en translation de l'ensemble moteur.

L'élément de structure 24 comporte un trou 39, par lequel est apte à passer l'arbre d'entraînement de manière à être d'un côté de l'élément en prise avec le balai d'essuyage de la vitre et de l'autre côté de l'élément de structure en prise avec l'ensemble moteur porté par la platine rendue solidaire dudit élément de structure. Le trou présente une forme oblongue d'axe parallèle à l'axe de la crémaillère et à la direction de coulissement de l'ensemble moteur, pour que l'arbre d'entraînement puisse suivre le coulissement de l'ensemble moteur de la position primaire à la position secondaire et inversement.

On comprendra que dans le cas d'un dispositif d'essuyage de vitre arrière, l'élément de structure sur lequel est fixée la platine est une porte de coffre arrière. Toutefois, n'importe quel élément de structure pourrait convenir à la mise en place du dispositif d'essuyage dès lors qu'il comporte une vitre à essuyer.

On entend décrire plus en détail le fonctionnement de ces moyens de transformation et de ces moyens de guidage en décrivant l'utilisation du dispositif d'essuyage dans un véhicule automobile.

Le dispositif d'essuyage est monté dans une position primaire illustrée sur la figure 2 et dans laquelle d'une part le pignon et la crémaillère sont en prise, et d'autre part le chariot est disposé en prise sur le rail. Dans cette position primaire, qui correspond à la première position extrême du balai d'essuyage illustré sur la figure 4, le chariot 14 est positionné à une première extrémité 40 du rail 34 tandis que le pignon est disposé à une première extrémité de la crémaillère 42.

Lorsque les balais d'essuyage sont activés, que ce soit par une commande manuelle de l'utilisateur ou par des moyens de détection automatique, une instruction de commande est envoyée pour mettre en marche le moteur. Il en résulte en sortie un mouvement de rotation de l'arbre d'entraînement 6 autour d'un premier axe dans un premier sens, qui outre la mise en rotation du porte balai 5 et du balai d'essuyage 4 qu'il porte, génère un mouvement de rotation dans le même premier sens du pignon 18 solidaire de l'arbre d'entraînement. La rotation de ce pignon, en prise sur la crémaillère fixe, génère un déplacement du pignon vers la deuxième extrémité 44 de la crémaillère et donc une translation, le long d'un deuxième axe perpendiculaire au premier axe (dans le sens de flèche T illustré sur la figure 2), de l'arbre d'entraînement par rapport à cette crémaillère. Il en résulte un déplacement en translation de l'ensemble moteur, apte à coulisser dans la direction parallèle à l'axe de la crémaillère grâce à la coopération des moyens de guidage en translation, à savoir le chariot solidaire de l'ensemble moteur et le rail porté par la platine.

Le déplacement en translation de l'ensemble se poursuit jusqu'à ce que le pignon soit en prise sur la crémaillère au niveau de sa deuxième extrémité (tel que cela est visible sur la figure 3). Dans cette position secondaire, qui correspond à la deuxième position extrême du balai d'essuyage illustré sur la figure 5, le chariot est positionné à une deuxième extrémité du rail 46.

Afin de réaliser le mouvement de va et vient du balai d'essuyage, on passe ainsi alternativement entre la position primaire et la position secondaire, grâce à la rotation alternée de l'arbre moteur. En passant de l'une à l'autre de ces positions, le balai d'essuyage tourne autour de son axe et cet axe se déplace. On a une rotation du balai qui est simultanée à son déplacement en translation.

On observe, notamment sur la figure 6, que le centre de rotation de la trajectoire du balai d'essuyage se déplace le long d'un axe rectiligne, de sorte que la trajectoire définie par le balai d'essuyage est elliptique, et l'on constate que le dispositif d'essuyage selon l'invention permet une meilleure couverture de la vitre à essuyer que si le centre de rotation était resté fixe.

La description qui précède explique clairement comment l'invention permet d'atteindre les objectifs qu'elle s'est fixés et notamment de proposer un dispositif d'essuyage de vitre qui offre une plus grande surface d'essuyage sans pour cela nécessiter une augmentation du nombre de balais d'essuyage.

Bien entendu, diverses modifications peuvent être apportées par l'homme du métier aux structures du dispositif d'essuyage de vitre, qui viennent d'être décrites à titre d'exemples. L'invention est uniquement limité par l'étendu des revendications. A titre d'exemple, en variante non représentée, on pourra prévoir que la crémaillère et le rail de guidage soient portés par des pièces distinctes, ou qu'ils soient formés directement sur l'élément de structure du véhicule automobile.

## Revendications

1. Dispositif d'essuyage de vitre (2) de véhicule automobile, comportant un balai d'essuyage (4) entraîné en rotation par un arbre d'entraînement (6) disposé en sortie d'un ensemble moteur (8) adapté à créer un mouvement de rotation alternée dudit arbre d'entraînement, **caractérisé en ce qu'**il comporte en outre des moyens d'entraînement en translation dudit ensemble moteur, une partie desdits moyens d'entraînement étant portée par ledit arbre d'entraînement.

2. Dispositif selon la revendication 1, **caractérisé en ce que** lesdits moyens d'entraînement en translation comportent des moyens de transformation d'un mouvement de rotation de l'arbre d'entraînement (6) autour d'un premier axe en un mouvement de translation de cet arbre d'entraînement le long d'un deuxième axe perpendiculaire audit premier axe.

3. Dispositif selon la revendication 2, **caractérisé en ce que** les moyens de transformation comportent un pignon (18) et une crémaillère (20), l'arbre d'entraînement (6) portant ledit pignon.

4. Dispositif selon la revendication précédente, **caractérisé en ce que** le pignon (18) et la crémaillère (20) présentent une denture droite.

5. Dispositif selon la revendication 3 ou 4, **caractérisé en ce que** la crémaillère (20) est formée sur une platine (22) disposée transversalement à l'arbre d'entraînement (6).

6. Dispositif selon la revendication précédente, **caractérisé en ce que** la crémaillère (20) est formée sur une tranche de ladite platine (22) pour coopérer avec le pignon (18) porté par l'arbre d'entraînement (6).

7. Dispositif selon la revendication 2, **caractérisé en ce que** lesdits moyens d'entraînement en translation comportent en outre des moyens de guidage en translation de l'ensemble moteur.

8. Dispositif selon la revendication 7, **caractérisé en ce que** les moyens de guidage en translation comportent un rail (34) et un chariot (14), ledit chariot étant solidaire de l'ensemble moteur (8) et étant apte à coulisser le long dudit rail, transversalement à l'axe de rotation de l'arbre d'entraînement (6).

9. Dispositif selon la revendication 8, dans lequel les moyens de transformation comportent un pignon (18) porté par l'arbre d'entraînement (6) et une crémaillère (20) formée sur une platine (22) disposée transversalement à l'arbre d'entraînement (6), **caractérisé en ce que** ladite platine porte ledit rail (34).

10. Dispositif selon la revendication précédente, **caractérisé en ce que** la platine (22) est fixée sur un élément de structure (24) porteur de la vitre à essuyer.

11. Dispositif selon l'une des revendications précédentes, **caractérisé en ce que** le mouvement de rotation alternée de l'arbre d'entraînement (6) est réalisé par un ensemble moteur à rotation continue et par un dispositif mécanique, qui crée cette alternance.

12. Elément de structure (24) de véhicule automobile, comportant une vitre adaptée à être essuyée par le dispositif d'essuyage (2) selon l'une des revendications précédentes, ledit élément de structure comportant un trou (39) à travers lequel l'arbre d'entraînement (6) est apte à passer pour être d'un côté de l'élément en prise avec le balai d'essuyage (4) de la vitre et pour être de l'autre côté de l'élément de structure en prise avec l'ensemble moteur (8) porté par la platine (22) rendue solidaire dudit élément de structure, **caractérisé en ce que** ledit trou présente une forme oblongue d'axe parallèle à la direction de coulissement de l'ensemble moteur.

13. Véhicule automobile dans lequel l'élément de structure (24) selon la revendication 12 est une porte de coffre arrière.

## Patentansprüche

1. Scheibenwischervorrichtung (2) für ein Kraftfahrzeug, umfassend ein Wischerblatt (4), das von einer Antriebswelle (6) in Drehung versetzt wird, die am Ausgang einer Motoranordnung (8) angeordnet ist, die geeignet ist, eine alternierende Drehbewegung der Antriebswelle zu erzeugen, **dadurch gekennzeichnet, dass** sie ferner Translationsantriebsmittel der Motoranordnung aufweist, wobei ein Teil der Antriebsmittel von der Antriebswelle getragen wird.

2. Vorrichtung nach Anspruch 1, **dadurch gekennzeichnet, dass** die Translationsantriebsmittel Mittel zum Umwandeln einer Drehbewegung der Antriebswelle (6) um eine erste Achse in eine Translationsbewegung dieser Antriebswelle entlang einer zweiten Achse, die senkrecht zu der ersten Achse ist, aufweist.

3. Vorrichtung nach Anspruch 2, **dadurch gekennzeichnet, dass** die Mittel zum Umwandeln ein Ritzel (18) und eine Zahnstange (20) aufweisen, wobei die Antriebswelle (6) das Ritzel trägt.

4. Vorrichtung nach dem vorhergehenden Anspruch, **dadurch gekennzeichnet, dass** das Ritzel (18) und die Zahnstange (20) eine Geradverzahnung aufweisen.

5. Vorrichtung nach Anspruch 3 oder 4, **dadurch gekennzeichnet, dass** die Zahnstange (20) auf einer Platte (22) ausgebildet ist, die quer zur Antriebswelle (6) angeordnet ist.

6. Vorrichtung nach dem vorhergehenden Anspruch, **dadurch gekennzeichnet, dass** die Zahnstange (20) auf einem Abschnitt der Platte (22) ausgebildet ist, um mit dem Ritzel (18) zusammenzuwirken, das von der Antriebswelle (6) getragen wird.

7. Vorrichtung nach Anspruch 2, **dadurch gekennzeichnet, dass** die Translationsantriebsmittel ferner Translationsführungsmittel der Motoranordnung aufweisen.

8. Vorrichtung nach Anspruch 7, **dadurch gekennzeichnet, dass** die Translationsführungsmittel eine Schiene (34) und einen Schlitten (14) aufweisen, wobei der Schlitten mit der Motoranordnung (8) fest verbunden ist und geeignet ist, entlang der Schiene quer zu der Drehachse der Antriebswelle (6) zu gleiten.

9. Vorrichtung nach Anspruch 8, **dadurch gekennzeichnet, dass** die Mittel zum Umwandeln ein Ritzel (18), das von der Antriebswelle (6) getragen wird, und eine Zahnstange (20) aufweisen, die auf einer Platte (22) ausgebildet ist, die quer zur Antriebswelle (6) angeordnet ist, **dadurch gekennzeichnet, dass** die Platte die Schiene (34) trägt.

10. Vorrichtung nach dem vorhergehenden Anspruch, **dadurch gekennzeichnet, dass** die Platte (22) auf einem tragenden Strukturelement (24) der zu wischenden Scheibe befestigt ist.

11. Vorrichtung nach einem der vorhergehenden Ansprüche, **dadurch gekennzeichnet, dass** die alternierende Drehbewegung der Antriebswelle (6) durch eine Motoranordnung mit kontinuierliche Drehung und durch eine mechanische Vorrichtung ausgeführt wird, die diese Alternanz erzeugt.

12. Strukturelement (24) eines Kraftfahrzeugs, umfassend eine Scheibe, die geeignet ist, von der Wischervorrichtung (2) nach einem der vorhergehenden Ansprüche abgewischt zu werden, wobei das Strukturelement ein Loch (39) aufweist, durch das die Antriebswelle (6) geeignet ist, hindurchzugehen, um auf einer Seite des Elements mit dem Wischerblatt (4) der Scheibe in Eingriff zu stehen, und um auf der anderen Seite des Strukturelements mit der Motoranordnung (8) in Eingriff zu stehen, die von der Platte (22) getragen wird, die mit dem Strukturelement fest verbunden ist, **dadurch gekennzeichnet, dass** das Loch eine längliche Form mit einer Achse, die zur Gleitrichtung der Motoranordnung parallel ist, aufweist.

13. Kraftfahrzeug, in dem das Strukturelement (24) nach Anspruch 12 eine hintere Kofferraumtür ist.

## Claims

1. A device (2) for wiping a motor vehicle window, comprising a wiper blade (4) driven in rotation by a drive shaft (6) arranged at the output of a motor assembly (8) suitable for creating an alternating rotational movement of said drive shaft, **characterized in that** it further comprises means for driving said motor assembly in translation, a part of said driving means being borne by said drive shaft.

2. The device as claimed in claim 1, **characterized in that** said translational driving means comprise means for transforming a rotational movement of the drive shaft (6) about a first axis into a translational movement of this drive shaft along a second axis at right angles to said first axis.

3. The device as claimed in claim 2, **characterized in that** the transformation means comprise a pinion (18) and a rack (20), the drive shaft (6) bearing said pinion.

4. The device as claimed in the preceding claim, **characterized in that** the pinion (18) and the rack (20) have straight teeth.

5. The device as claimed in claim 3 or 4, **characterized in that** the rack (20) is formed on a plate (22) arranged transversely to the drive shaft (6).

6. The device as claimed in the preceding claim, **characterized in that** the rack (20) is formed on an edge of said plate (22) to cooperate with the pinion (18) borne by the drive shaft (6).

7. The device as claimed in claim 2, **characterized in that** said translational driving means further comprise means for guiding the motor assembly in translation.

8. The device as claimed in claim 7, **characterized in that** the translational guiding means comprise a rail (34) and a carriage (14), said carriage being secured to the motor assembly (8) and being capable of sliding along said rail, transversely to the axis of rotation of the drive shaft (6).

9. The device as claimed in claim 8, in which the transformation means comprise a pinion (18) borne by the drive shaft (6) and a rack (20) formed on a plate (22) arranged transversely to the drive shaft (6), **characterized in that** said plate bears said rail (34).

10. The device as claimed in the preceding claim, **characterized in that** the plate (22) is fixed onto a structural element (24) bearing the window to be wiped.

11. The device as claimed in one of the preceding claims, **characterized in that** the alternating rotational movement of the drive shaft (6) is performed by a continuously rotating motor assembly and by a mechanical device, which creates this alternation.

12. A structural element (24) of a motor vehicle, comprising a window suitable for being wiped by the wiping device (2) as claimed in one of the preceding claims, said structural element comprising a hole (39) through which the drive shaft (6) can pass to be on one side of the element engaged with the wiper blade (4) of the window and to be on the other side of the structural element engaged with the motor assembly (8) borne by the plate (22) secured to said structural element, **characterized in that** said hole has an oblong form of axis parallel to the direction of sliding of the motor assembly.

13. A motor vehicle in which the structural element (24) as claimed in claim 12 is a trunk lid.
